Europäisches Patentamt

(19) European Patent Office

Office européen des brevets

(11) Publication number: **0 208 427**
**B1**

(12) **EUROPEAN PATENT SPECIFICATION**

(45) Date of publication of the patent specification:
07.02.90

(21) Application number: **86304477.2**

(22) Date of filing: **11.06.86**

(51) Int. Cl.⁵: **C 09 K   5/04**

(54) **Heat pumps.**

(30) Priority: **26.06.85 GB 8516161**
**13.02.86 GB 8603575**

(43) Date of publication of application:
**14.01.87 Bulletin 87/03**

(45) Publication of the grant of the patent:
**07.02.90 Bulletin 90/06**

(84) Designated Contracting States:
**AT BE CH DE FR GB IT LI NL SE**

(56) References cited:
**GB-A-2 144 762**
**US-A-3 004 919**
**US-A-3 642 059**

**CHEMICAL ABSTRACTS, vol. 90, no. 4, 22nd January 1979, page 406, abstract no. 29744q, Columbus, Ohio, US; L.E. KRUTILOVA et al.: " Solubility of the components in the potassium hydroxide-cesium hydroxide-water ternary system at (-20)-(-80o)", & UKR. KHIM. ZH. (RUSS. ED.) 1978, 44(9), 993-4**

(73) Proprietor: **IMPERIAL CHEMICAL INDUSTRIES PLC**
**Imperial Chemical House Millbank**
**London SW1P 3JF (GB)**

(72) Inventor: **Scrutton, Anthony**
**Ashleigh Butt Hill**
**Napton Near Rugby Warwickshire CV23 8NE (GB)**
Inventor: **Ramshaw, Colin**
**4 The Spinney**
**Norley Warrington WA6 8LS (GB)**

(74) Representative: **Collingwood, Anthony Robert**
**Imperial Chemical Industries PLC Legal Department: Patents P.O. Box 6 Bessemer Road**
**Welwyn Garden City Hertfordshire AL7 1HD (GB)**

## Description

This invention relates to heat pumps of the absorption cycle type.

In absorption cycle heat pumps, a high temperature source of energy and a low temperature source of energy deliver heat to the heat pump which then delivers the sum of the heat input from both sources at an intermediate temperature. In operation, a vapourisable working fluid accepts heat from a low temperature source of energy, typically air or water at ambient temperature, and evaporates; the resulting vapour passes to an absorber where it is absorbed in an absorbent and gives off heat; the working mixture so formed is passed to a generator which is provided with a high temperature source of energy, typically the hot gases obtained on combustion of a fossil fuel, where it is heated and working fluid vapour is generated; the working fluid vapour so generated flows under pressure to a condenser where it condenses and gives off heat; the liquid working fluid so formed is then passed through an expansion valve to the evaporator and hence completes the cycle.

Conventional working mixtures for use in absorption cycle heat pumps comprise a fluorinated hydrocarbon, e.g. monochlorodifluoromethane, 1-chloro-2,2,2-trifluoroethane and 1,1,1,2-tetrafluoroethane, and a suitable absorbent therefor, typically having a slightly basic character, e.g. tetraglyme; or ammonia with water as the absorbent, which working mixture requires high operating pressures.

Working mixtures comprising methanol and lithium bromide have been proposed, although the high temperature stability of such mixtures over the lifetime of a heat pump is questionable.

Recently it has been suggested that in many respects water is the ideal working fluid for use in absorption cycle heat pumps and that sulphuric acid would be the most effective absorbent therefor. However, at the high temperatures to which the absorbent is subjected in the generator, concentrated sulphuric acid is highly corrosive. It has been suggested that aqueous solutions of sodium hydroxide, or aqueous solutions of sodium hydroxide/potassium hydroxide or lithium bromide or lithium chloride in admixture with one or both of zinc chloride and zinc bromide may be used as the absorbent. Such aqueous solutions tend to have unacceptably high freezing points and such admixtures tend to have unacceptably high vapour pressures at the working temperature in the absorber compared with the necessarily higher vapour pressure at the working temperature in the evaporator. This in turn places a practical lower limit on the evaporator working temperature which is typically in the range 4 to 20°C. Where it is desired that the evaporator heat source is ambient air or water, this limit renders such pumps useless for winter heating in temperate claimates, where a practical lower limit in the range 0 to -5°C is needed.

We have now devised an absorption cycle heat pump wherein the working mixture comprises an aqueous mixture of potassium and caesium hydroxides and optionally sodium hydroxide, which mixture overcomes many of the aforesaid disadvantages. In particular, such working mixtures, surprisingly have a combination of acceptably low freezing points, some being less than 20°C, and acceptably low vapour pressures, some being less than 3 millimetres of mercury (400 Pa), at the temperature obtaining in the absorber, typically about 65°C. Additionally, they have high vapour pressures, greater than 250 millimeters of mercury (33,3 kPa) say, at the temperature of the high temperature heat source, about 180°C say.

According to the present invention, there is provided an absorption cycle heat pump characterised in that the working mixture leaving the absorber comprises, on a weight basis,

from 15 to 85 % of caesium hydroxide;
from 5 to 45 % of potassium hydroxide;
from 0 to 35 % of sodium hydroxide, and
from 10 to 35 % of water.

Working mixtures consisting only of aqueous mixtures of potassium and caesium hydroxides suitably contain, on a weight basis, from 50 to 85 % of caesium hydroxide, from 5 to 25 % of potassium hydroxide and from lo to 35 % of water. Preferred mixtures contain, on a weight basis, from 60 to 75 % of caesium hydroxide, from 5 to 20 % of potassium hydroxide and from 15 to 30 % of water. A particularly preferred mixture comprises about 67 % by weight of caesium hydroxide, about 10 % by weight of potassium hydroxide and about 23 % by weight of water.

Working mixtures containing sodium hydroxide in addition to potassium and caesium hydroxides suitably contain, on a weight basis, from 15 to 50 % of caesium hydroxide, from 20 to 45 % of potassium hydroxide, from 10 to 35 % of sodium hydroxide and from 10 to 35 % of water. Preferred mixtures contain, in a weight basis, from 25 to 40 % of caesium hydroxide, from 25 to 40 % of potassium hydroxide, from 15 to 30 % of sodium hydroxide and from 10 to 35 % of water. Particularly preferred mixtures contain, on a weight basis, from 29 to 32 % of caesium hydroxide, from 26 to 29 % of potassium hydroxide, from 19 to 22 % of sodium hydroxide and from 17 to 26 % of water corresponding approximately to a fluid as initially put in the absorber-generator loop comprising about 31 % by weight of caesium hydroxide, about 28 % by weight of potassium hydroxide, about 21 % by weight of sodium hydroxide and about 20 % by weight of water, although this will depend to some extent on the relative rates of mass flow in the absorber-generator loop and of water vapour absorption in the absorber.

The low temperature evaporator working temperature is suitably in the range 0 to -5°C and the absorber working temperature is typically in the range 55 to 75°C. Under these conditions, it is desirable to balance the rate of mass flow in the absorber-generator loop and the rate of water absorption in the absorber such that the difference in total dissolved solids concentration in the water-rich absorber output and water-lean absorber input

2

is greater than 2 % w/w, preferably greater than 3 %, subject to the above constraint on the absorber output fluid vapour pressure. This has the advantage of reducing pumping and heat exchanger requirements in the loop.

The ability to operate at the above mentioned temperatures is an important aspect of the present invention. It will be appreciated, however, that in year-round operation, other temperatures, for example, higher temperatures, will be encountered at certain times, for example during the summer months.

The working mixtures described herein may be used in absorption cycle heat pumps of conventional design or preferably in rotary absorption cycle heat pumps, for example as described in our EP-A-119 776, the disclosure of which is incorporated herein by way of reference.

It will be appreciated that where there is a possibility that the temperature of the working fluid in the evaporator may fall to less than 0°C, either during operation of the heat pump or when it is not in use, it is often preferred that a suitable anti-freezing agent, which may be inorganic or organic, e.g. a mixture of caesium hydroxide and potassium hydroxide and optionally sodium hydroxide, is added to the working fluid.

It is believed that the present invention may better be understood by means of a detailed description of the structure and operation of a specific embodiment and for this purpose reference is made to the accompanying drawings, in which:

Figure 1    Illustrates in a simple schematic manner the components of an absorption cycle heat pump; and
Figure 2    illustrates the juxtaposition of those components and also the fluid flows, in an embodiment of the heat pump according to the present invention.

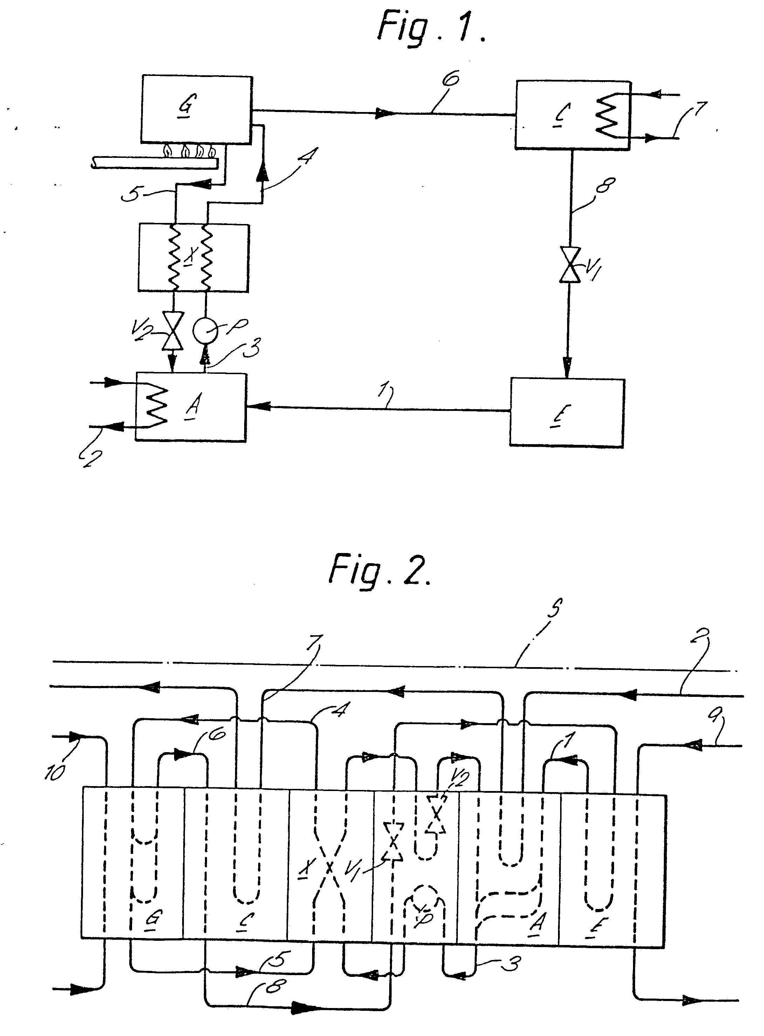

Referring firstly to Figure 1, an aqueous working fluid is circulated by means of a pump P around a system consisting of an evaporator E, an absorber A, a solution heat exchanger X, a vapour generator G and a condenser C, in that sequence. In the evaporator E, the working fluid is vaporised by heat exchange with a flow of ambient air (or with some alternative ambient source of heat, such as water or the ground). The vapour passes via line 1 to the absorber A, in which it is absorbed into a water-lean mixture of water and potassium and caesium hydroxides, yielding up its heat of solution in doing so. The heat is taken up by heat exchange into a stream of a medium to be heated, typically a central heating medium, e.g. water or air, flowing in line 2.

The water-rich mixture of water and potassium and caesium hydroxides emerging from the absorber A, which comprises about 67 % w/w caesium hydroxide, about 10 % w/w potassium hydroxide and about 23 % w/w water, passes via the line 3 and pump P to the solution heat exchanger X, wherein it takes up heat from the aforesaid water-lean mixture fed to the absorber, before flowing via the line 4 to the vapour generator G. In the generator, the aforesaid water-rich mixture is heated, for example directly by gas flame or indirectly with hot gas, and working fluid vapour is evolved. The resulting water-lean mixture is returned to the absorber A via the line 5, the solution heat exchanger X and a pressure reducing valve V2.

Vapour from the generator G is conveyed by the line 6 to the condenser C, in which it loses heat to medium to be heated flowing in line 7 and is condensed to liquid. The liquid is finally returned to the evaporator E via line 8 and an expansion valve V1.

As will be readily apparent, the total heat input to the heat pump is the sum of the low grade heat taken from the ambient fluid at the evaporator E and the high grade heat supplied to the vapour generator G. The heat output, which is at a level intermediate between that at the evaporator and that at the generator, is that taken up by the medium to be heated in the absorber A and the condenser C.

The embodiment of the heat pump according to the present invention illustrated schematically in Figure 2 comprises the components of Figure 1 mounted in the illustrated sequence upon a shaft at S, for rotation therewith. In that figure, parts corresponding to those of Figure 1 are indicated by the use of the same numbering and lettering. As will be apparent, the sequence of flow of fluids through the heat pump is essentially the same as Figure 1, although the placing of the components in close juxtaposition upon a rotating shaft makes possible the assembly of a more compact unit than would be apparent from Figure 1. The line 9 in Figure 2 is the route by which ambient air is introduced to the evaporator. Hot gas from a suitable burner is introduced to the vapour generator by means of line 10. The medium to be heated, which flows through line 2 and then line 7, absorbs heat in the absorber and then in the condenser.

The invention is further illustrated by the following Examples.

## Examples

Working mixtures of the type described herein may be used in a heat pump as described in EP-A-119 776 The performance of such a heat pump using such working mixtures in a number of different operating conditions is described below.

Two different formulations were used:

- Formulation A - CsOH and KOH in the ratio 6.7 : 1 by weight with a variable proportion of water; and
- Formulation B - CsOH, KOH and NaOH in the ratio 38.6 : 35.2 : 26.2 by weight with a variable proportion of water.

In a heat pump delivering 8788W to circulating hot water, which enters the heat pump at 63.9°C and leaves the heat pump at 72.7°C it can be calculated that the conditions prevailing inside the heat pump are as shown

3

in Table 1 and Table 2 according as Formulation A or Formulation B is used as the working mixture. The lines referred to in the Tables are those shown in Figure 2.

**Table 1 - Formulation A**

| Line | Physical State | Mole Fraction Working Fluid | Mass Flow Rate (g/s) | Temperature (°C) | Pressure (Pa) |
|---|---|---|---|---|---|
| 1 | Vapour | 1.000 | 1.542 | −3.180 | 481.8 |
| 3 | Liquid | 0.645 | 50.000 | 72.280 | 481.8 |
| 4 | Liquid | 0.645 | 50.000 | 194.300 | 38241.4 |
| 5 | Liquid | 0.608 | 48.458 | 203.830 | 38241.4 |
| 6 | Vapour | 1.000 | 1.542 | 203.830 | 38241.4 |
| 8 | Liquid | 1.000 | 1.542 | 74.770 | 38241.4 |

When Formulation A is used it can be further calculated (i) that the heat absorbed (a) by the fluids in the vapour generator is 5425W, and (b) by the working fluid in the evaporator is 3363W, (ii) that the heat transferred to the water (a) in the absorber is 4825W and (b) in the condenser is 3963W, (iii) that the heat exchanged in the heat exchanger is 14509W; and (iv) the coefficient of performance (COP) of the heat pump, defined by the equation

$$COP = \frac{\text{Total heat output of the pump}}{\text{High-grade heat input at the generator}}$$

is 1.62.

**Table 2 - Formulation B**

| Line | Physical State | Mole Fraction Working Fluid | Mass Flow Rate (g/s) | Temperature (°C) | Pressure (Pa) |
|---|---|---|---|---|---|
| 1 | Vapour | 1.000 | 1.616 | −3.180 | 481.8 |
| 3 | Liquid | 0.509 | 50.000 | 72.280 | 481.8 |
| 4 | Liquid | 0.509 | 50.000 | 172.100 | 38241.4 |
| 5 | Liquid | 0.470 | 48.384 | 182.130 | 38241.4 |
| 6 | Vapour | 1.000 | 1.616 | 182.130 | 38241.4 |
| 8 | Liquid | 1.000 | 1.616 | 74.770 | 38241.4 |

When Formulation B is used it can be further calculated (i) that the heat absorbed (a) by the fluids in the vapour generator is 5263W, and (b) by the working fluid in the evaporator is 3525W, (ii) that the heat transferred to the water (a) in the absorber is 4703W and (b) in the condenser is 4085W, (iii) that the heat exchanged in the heat exchanger is 8063W; and (iv) the coefficient of performance is 1.67.

In a heat pump delivering 5152W to circulating hot water, which enters the heat pump at 40.6°C and leaves the heat pump at 45.8°C it can be calculated that the conditions prevailing inside the heat pump are as shown in Table 3 and Table 4 according as Formulation A or Formulation B is used as the working mixture.

**Table 3 - Formulation A**

| Line | Physical State | Mole Fraction Working Fluid | Mass Flow Rate (g/s) | Temperature (°C) | Pressure (Pa) |
|---|---|---|---|---|---|
| 1 | Vapour | 1.000 | 0.949 | 4.550 | 844.7 |
| 3 | Liquid | 0.731 | 48.792 | 50.650 | 844.7 |
| 4 | Liquid | 0.731 | 48.792 | 111.800 | 13732.9 |
| 5 | Liquid | 0.717 | 47.843 | 115.450 | 13732.9 |
| 6 | Vapour | 1.000 | 0.949 | 115.450 | 13732.9 |
| 8 | Liquid | 1.000 | 1.716 | 52.110 | 13732.9 |

When Formulation A is used it can be further calculated (i) that the heat absorbed (a) by the fluids in the vapour generator is 2976W, and (b) by the working fluid in the evaporator is 2176W, (ii) that the heat transferred to the water (a) in the absorber is 2781W and (b) in the condenser is 2371W, (iii) that the heat exchanged in the heat exchanger is 7518W; and (iv) the coefficient of performance is 1.73.

**Table 4 - Formulation B**

| Line | Physical State | Mole Fraction Working Fluid | Mass Flow Rate (g/s) | Temperature (°C) | Pressure (Pa) |
|---|---|---|---|---|---|
| 1 | Vapour | 1.000 | 1.001 | 4.550 | 844.4 |
| 3 | Liquid | 0.695 | 50.000 | 50.650 | 844.4 |
| 4 | Liquid | 0.695 | 50.000 | 103.500 | 13688.8 |
| 5 | Liquid | 0.683 | 48.999 | 106.610 | 13688.8 |
| 6 | Vapour | 1.000 | 1.001 | 106.610 | 13688.8 |
| 8 | Liquid | 1.000 | 1.001 | 52.110 | 13688.8 |

When Formulation B is used it can be further calculated (i) that the heat absorbed (a) by the fluids in the vapour generator is 2856W, and (b) by the working fluid in the evaporator is 2296W, (ii) that the heat transferred to the water (a) in the absorber is 2485W and (b) in the condenser is 2667W, (iii) that the heat exchanged in the heat exchanger is 5716W; and (iv) the coefficient of performance is 1.80.

In a heat pump delivering 10kW to circulating hot water, which enters the heat pump at 60°C and leaves the heat pump at 70°C it can be calculated that the conditions prevailing inside the heat pump are as shown in Table 5 and Table 6 according as Formulation A or Formulation B is used as the working mixture.

**Table 5 - Formulation A**

| Line | Physical State | Mole Fraction Working Fluid | Mass Flow Rate (g/s) | Temperature (°C) | Pressure (Pa) |
|---|---|---|---|---|---|
| 1 | Vapour | 1.000 | 1.716 | −5.760 | 395.9 |
| 3 | Liquid | 0.620 | 52.123 | 79.490 | 395.9 |
| 4 | Liquid | 0.620 | 52.123 | 225.300 | 51918.0 |
| 5 | Liquid | 0.575 | 50.408 | 237.380 | 51918.0 |
| 6 | Vapour | 1.000 | 1.716 | 237.380 | 51918.0 |
| 8 | Liquid | 1.000 | 1.716 | 82.330 | 51918.0 |

When Formulation A is used it can be further calculated (i) that the heat absorbed (a) by the fluids in the vapour generator is 6322W, and (b) by the working fluid in the evaporator is 3678W, (ii) that the heat transferred to the water (a) in the absorber is 5533W and (b) in the condenser is 4467W, (iii) that the heat exchanged in the heat exchanger is 17829W; and (iv) the coefficient of performance is 1.58.

**Table 6 - Formulation B**

| Line | Physical State Working | Mole Fraction Rate Fluid | Mass Flow (g/B) | Temperature (°C) | Pressure (Pa) |
|---|---|---|---|---|---|
| 1 | Vapour | 1.000 | 1.783 | −5.760 | 395.9 |
| 3 | Liquid | 0.620 | 50.000 | 79.490 | 395.9 |
| 4 | Liquid | 0.620 | 50.000 | 196.100 | 51918.0 |
| 5 | Liquid | 0.575 | 48.217 | 210.440 | 51918.0 |
| 6 | Vapour | 1.000 | 1.783 | 210.610 | 51918.0 |
| 8 | Liquid | 1.000 | 1.783 | 82.330 | 51918.0 |

When Formulation B is used it can be further calculated (i) that the heat absorbed (a) by the fluids in the vapour generator is 6179W, and (b) by the working fluid in the evaporator is 3821W, (ii) that the heat transferred to the water (a) in the absorber is 5454W and (b) in the condenser is 4546W, (iii) that the heat exchanged in the heat exchanger is 8637W; and (iv) the coefficient of performance is 1.62.

## Claims

1. An absorption cycle heat pump characterised in that the working mixture leaving the absorber comprises, on a weight basis, from 15 to 85 % of caesium hydroxide, from 5 to 45 % of potassium hydroxide, from 0 to 35 % of sodium hydroxide and from 10 to 35 % of water.

2. An absorption cycle heat pump according to Claim 1 wherein the working mixture is an aqueous mixture of caesium and potassium hydroxides containing, on a weight basis, from 50 to 85 % of caesium hydroxide, from 5 to 25 % of potassium hydroxide and from 10 to 35 % of water.

3. An absorption cycle heat pump according to Claim 2 wherein the working mixture contains, on a weight basis, from 60 to 75 % of caesium hydroxide, from 5 to 20 % of potassium hydroxide and from 15 to 30 % of water.

4. An absorption cycle heat pump according to Claim 3 wherein the working mixture contains about 67 % by weight of caesium hydroxide, about 10 % by weight of potassium hydroxide and about 23 % by weight of water.

5. An absorption cycle heat pump according to Claim 1 wherein the working mixture contains, on a weight basis, from 15 to 50 % of caesium hydroxide, from 20 to 45 % of potassium hydroxide, from 10 to 35 % of sodium hydroxide and from 10 to 35 % of water.

6. An absorption cycle heat pump according to Claim 5 wherein the working mixture contains, on a weight basis, from 25 to 40 % of caesium hydroxide, from 25 to 40 % of potassium hydroxide, from 15 to 30 % of sodium hydroxide and from 10 to 35 % of water.

7. An absorption cycle heat pump according to Claim 6 wherein the working mixture contains, on a weight basis, from 29 to 32 % of caesium hydroxide, from 26 to 29 % of potassium hydroxide, from 19 to 22 % of sodium hydroxide and from 17 to 26 % of water.

8. An absorption cycle heat pump according to Claim 7 wherein the working mixture contains about 31 % by weight of caesium hydroxide, about 28 % by weight of potassium hydroxide, about 21 % by weight of sodium hydroxide and about 20 % by weight of water.

9. An absorption cycle heat pump according to Claim 1 comprising at least an evaporator, an absorber, a vapour generator and a condenser, at least one of the components being in the form of one or more rotatable plates across the thickness of which plate(s) a heat transfer takes place.

## Patentansprüche

1. Absorptionszyklus-Wärmepumpe, dadurch gekennzeichnet, daß die Arbeitsmischung, die den Absorber verläßt, 15 bis 85 Masse-% Cäsiumhydroxid, 5 bis 45 Masse-% Kaliumhydroxid, 0 bis 35 Masse-% Natriumhydroxid und 10 bis 35 Masse-% Wasser enthält.

2. Absorptionszyklus-Wärmepumpe nach Anspruch 1, bei der die Arbeitsmischung eine wäßrige Mischung von Cäsium- und Kaliumhydroxid ist, die 50 bis 85 Masse-% Cäsiumhydroxid, 5 bis 25 Masse-% Kaliumhydroxid und 10 bis 35 Masse-% Wasser enthält.

3. Absorptionszyklus-Wärmepumpe nach Anspruch 2, bei der die Arbeitsmischung 60 bis 75 Masse-% Cäsiumhydroxid, 5 bis 20 Masse% Kaliumhydroxid und 15 bis 30 Masse-% Wasser enthält.

4. Absorptionszyklus-Wärmepumpe nach Anspruch 3, bei der die Arbeitsmischung etwa 67 Masse-% Cäsiumhydroxid, etwa 10 Masse-% Kaliumhydroxid und etwa 23 Masse-% Wasser enthält.

5. Absorptionszyklus-Wärmepumpe nach Anspruch 1 bei der die Arbeitsmischung 15 bis 50 Masse-% Cäsiumhydroxid, 20 bis 45 Masse-% Kaliumhydroxid, 10 bis 35 Masse-% Natriumhydroxid und 10 bis 35 Masse-% Wasser enthält.

6. Absorptionszyklus-Wärmepumpe nach Anspruch 5, bei der die Arbeitsmischung 25 bis 40 Masse-% Cäsiumhydroxid, 25 bis 40 Masse-% Kaliumhydroxid, 15 bis 30 Masse-% Natriumhydroxid und 10 bis 35 Masse-% Wasser enthält.

7. Absorptionszyklus-Wärmepumpe nach Anspruch 6, bei der die Arbeitsmischung 29 bis 32 Masse-% Cäsiumhydroxid, 26 bis 29 Masse-% Kaliumhydroxid, 19 bis 22 Masse-% Natriumhydroxid und 17 bis 26 Masse-% Wasser enthält.

8. Absorptionszyklus-Wärmepumpe nach Anspruch 7, bei der die Arbeitsmischung etwa 31 Masse-% Cäsiumhydroxid, etwa 28 Masse-% Kaliumhydroxid, etwa 21 Masse-% Natriumhydroxid und etwa 20 Masse-% Wasser enthält.

9. Absorptionszyklus-Wärmepumpe nach Anspruch 1, die wenigstens einen Verdampfer, einen Absorber, einen Dampferzeuger und einen Kondensator enthält, wobei wenigstens eine der Komponenten in Form einer oder mehr als einer drehbaren Platte vorliegt und wobei quer über die Dicke dieser Platte(n) eine Wärmeübertragung stattfindet.

## Revendications

1. Pompe à chaleur à cycle d'absorption, caractérisée en ce que le mélange de travail quittant l'absorbeur comprend, sur une base pondérale, de 15 à 85 % d'hydroxyde de césium, de 5 à 45 % d'hydroxyde de potassium, de 0 à 35 % d'hydroxyde de sodium et de 10 à 35 % d'eau.

2. Pompe à chaleur à cycle d'absorption suivant la revendication 1, dans laquelle le mélange de travail est un mélange aqueux d'hydroxydes de césium et de potassium contenant, sur une base pondérale, de 50 à 85 % d'hydroxyde de césium, de 5 à 25 % d'hydroxyde de potassium et de 10 à 35% d'eau.

3. Pompe à chaleur à cycle d'absorption suivant la revendication 2, dans laquelle le mélange de travail contient, sur une base pondérale, de 60 75 % d'hydroxyde de césium, de 5 à 20 % d'hydroxyde de potassium et de 15 à 30 % d'eau.

4. Pompe à chaleur à cycle d'absorption suivant la revendication 3, dans laquelle le mélange de travail contient environ 67 % en poids d'hydroxyde de césium, environ 10 % en poids d'hydroxyde de potassium et environ 23 % en poids d'eau.

5. Pompe à chaleur à cycle d'absorption suivant la revendication 1, dans laquelle le mélange de travail contient, sur une base pondérale, de 15 à 50 % d'hydroxyde de césium, de 20 à 45 % d'hydroxyde de potassium, de 10 à 35 % d'hydroxyde de sodium et de 10 à 35 % d'eau.

6. Pompe à chaleur à cycle d'absorption suivant la revendication 5, dans laquelle le mélange de travail contient, sur une base pondérale, de 25 à 40 % d'hydroxyde de césium, de 25 à 40 % d'hydroxyde de potassium, de 15 à 30 % d'hydroxyde de sodium et de 10 à 35 % d'eau.

7. Pompe à chaleur à cycle d'absorption suivant la revendication 6, dans laquelle le mélange de travail contient, sur une base pondérale, de 29 à 32 % d'hydroxyde de césium, de 26 à 29 % d'hydroxyde de potassium, de 19 à 22 % d'hydroxyde de sodium et de 17 à 26 % d'eau.

8. Pompe à chaleur à cycle d'absorption suivant la revendication 7, dans laquelle le mélange de travail contient environ 31 % en poids d'hydroxyde de césium, environ 28 % en poids d'hydroxyde de potassium, environ 21 % en poids d'hydroxyde de sodium et environ 20 % en poids d'eau.

9. Pompe à chaleur à cycle d'absorption suivant la revendication 1, comprenant au moins un évaporateur, un absorbeur, un générateur de vapeur et un condenseur, au moins l'un des composants ayant la forme d'une ou plusieurs plaques propres à tourner à travers l'épaisseur de laquelle ou desquelles un transfert de chaleur a lieu.

# Fig. 1.

# Fig. 2.